# EUROPEAN PATENT APPLICATION

(11) **EP 2 083 539 A1**
(43) Date of publication of application: **29.07.2009**
(21) Application number: 09250186.5
(22) Date of filing: 23.01.2009
(51) Int. Cl.: H04L 12/56, H04L 12/24

(54) **Communication device, network system, path management method, and program**

(30) Priority: 25.01.2008 JP 2008015102
(71) Applicant: NEC Corporation, Tokyo 108 (JP)
(72) Inventor: Kimura, Masamichi, Tokyo 140-8620 (JP); Iida, Shuichi, Tokyo 108-8001 (JP)
(74) Representative: MacDougall, Alan John Shaw

(57) **Abstract**

This is invention is to provide a communication device, a network system, a path management method, and a program in which a state of a path which has been set can be recognized in a case where the path has been set by autonomous distributed control via an autonomous distributed control non-supporting device in a network including both an autonomous distributed control supporting device and an autonomous distributed control non-supporting device. An autonomous distributed control supporting device as a main component includes virtual link information managing means for managing virtual link information indicating a virtual link in association with alarm information indicating a state of the virtual link, the virtual link being a route through an autonomous distributed control supporting device and an autonomous distributed control non-supporting device, path setting means for setting an autonomous distributed control path in the virtual link, collecting means for collecting POH information or SOH information of SONET/SDH from the autonomous distributed control path, and updating means for updating the alarm information managed by the virtual link information managing means based on alarm information included in the POH information or SOH information collected by the collecting means.

## Description

This application is based upon and claims the benefit of priority from Japanese patent application No. 2008-015102, filed on January 25, 2008, the disclosure of which is incorporated herein in its entirety by reference.

### BACKGROUND OF THE INVENTION

The present invention relates to a communication device, a network system, a path management method, and a program which allow a path to be set by autonomous distributed control in an environment including both a communication device which supports autonomous distributed control and a communication device which does not support autonomous distributed control.

### Description of Related Art

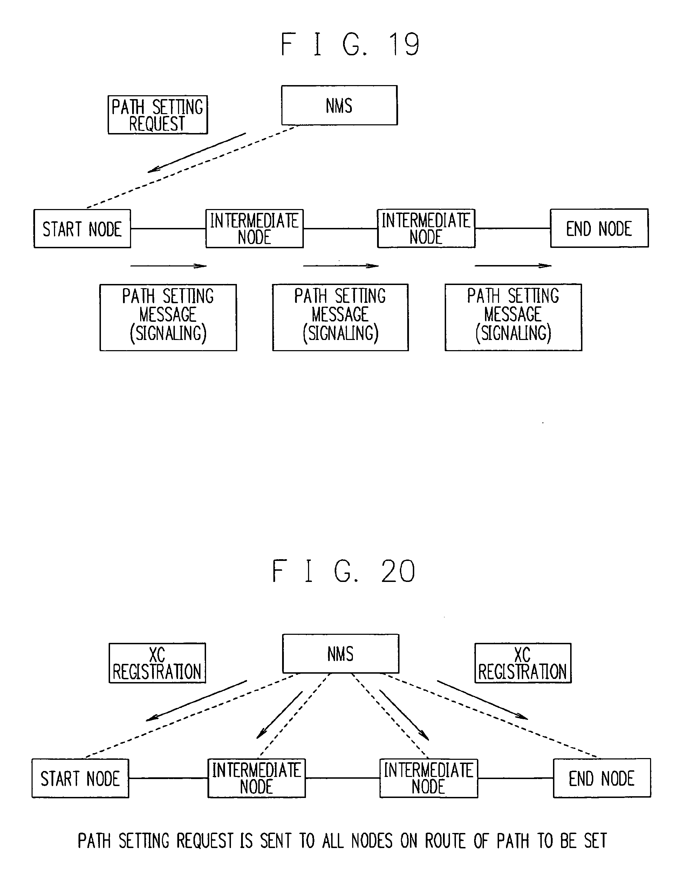

There is a network supporting path setting and management by autonomous distributed control (an autonomous distributed control supporting network). For example, it may be GMPLS (General Multi-protocol Label Switching), ASON (Automatically Switched Optical Network) and the like. In such an autonomous distributed control supporting network, there is a communication device (node) which supports path setting and management by autonomous distributed control (an autonomous distributed control supporting device). Fig. 19 shows one example of the autonomous distributed control supporting network. As shown in Fig. 19, a network management system (hereinafter referred to as NMS) sends a path setting request to a start node which is the starting point of a path to be set. Signaling from the start node to the end node is performed according to this path setting request so that the path is set.

On the other hand, in a network not supporting path setting and management by autonomous distributed control (an autonomous distributed control non-supporting network), path setting and management is performed by centralized control from an NMS. In such an autonomous distributed control non-supporting network, there is a communication device (node) which does not support path setting and management by autonomous distributed control (autonomous distributed control non-supporting device). Fig. 20 shows one example of the autonomous distributed control non-supporting device. As shown in Fig. 20, an NMS sends a path setting request to all nodes on a route of a path to be set. This is called Cross Connect (hereinafter referred to as XC) registration. The path is set when XC registration with respect to all the nodes is completed.

Compared to path setting and management by centralized control from an NMS, path setting and management by autonomous distributed control has advantages in that it reduces operational cost and provides flexible path route selection and failure recovery means, and the like.

However, in a network including both an autonomous distributed control supporting network and an autonomous distributed control non-supporting network (for example, see Japanese Patent Laid Open Publication No. 2006-352297), there occurs the following problem.

An autonomous distributed control supporting device in an autonomous distributed control supporting network has a Full LSP Re-Routing function (an example of switching to backup) as one typical functional example of path setting by autonomous distributed control. When a failure occurs, this function can detect the failure, calculate a bypass, and perform physical line setting automatically. On the other hand, an autonomous distributed control non-supporting device in an autonomous distributed control non-supporting network does not have a function of notifying an autonomous distributed control supporting device of an alarm about detection of a failure when the failure occurs. Therefore, if some failure occurs on a path which has been set by an autonomous distributed control via an autonomous distributed control non-supporting device, an autonomous distributed control supporting device cannot recognize this failure. Thus, the autonomous distributed control supporting device cannot perform the Full LSP Re-Routing function and the like. As described above, there is a problem that the benefit of path setting and management by autonomous distributed control cannot be obtained in a network including both an autonomous distributed control supporting network and an autonomous distributed control non-supporting network.

The present invention is made in view of the above described circumstances, and an embodiment provides a communication device, a network system, a path management method, and a program in which a state of a path which has been set can be recognized in a case where the path has been set by autonomous distributed control via an autonomous distributed control non-supporting device in a network including both an autonomous distributed control supporting device and an autonomous distributed control non-supporting device.

### SUMMARY

To achieve the above, an embodiment of the present invention includes following characteristics.

### <Communication device>

An exemplary aspect of the present invention is a communication device used as an autonomous distributed control supporting device which supports autonomous distributed control including: virtual link information managing means for managing virtual link information indicating a virtual link in association with alarm information indicating a state of the virtual link according to a request from a network management device, the virtual link being a route through the communication device and an autonomous distributed control non-supporting device which does not support autonomous distributed control; path setting means for setting an autonomous distributed control path in the virtual link; collecting means for collecting POH information or SOH information of SONET/SDH from the autonomous distributed control path; and updating means for updating the alarm information managed by the virtual link information managing means based on alarm information included in the POH information or SOH information collected by the collecting means.

### <Network system>

An exemplary aspect of the present invention is a network system including the communication device according to an exemplary aspect of the present invention.

### < Path management method >

An exemplary aspect of the present invention is a path management method including: a virtual link information managing step of managing virtual link information indicating a virtual link in association with alarm information indicating a state of the virtual link, the virtual link being a route through an autonomous distributed control supporting device which supports autonomous distributed control and an autonomous distributed control non-supporting device which does not support autonomous distributed control; a path setting step of setting an autonomous distributed control path in the virtual link; a collecting step of collecting POH information or SOH information of SONET/SDH from the autonomous distributed control path; and an updating step of updating the alarm information managed by the virtual link information managing step based on alarm information included in the POH information or SOH information collected by the collecting step.

### < Path management method >

An exemplary aspect of the present invention is a program which causes a computer to execute: a virtual link information managing process for managing virtual link information indicating a virtual link in association with alarm information indicating a state of the virtual link, the virtual link being a route through an autonomous distributed control supporting device which supports autonomous distributed control and an autonomous distributed control non-supporting device which does not support autonomous distributed control; a path setting process for setting an autonomous distributed control path in the virtual link; a collecting process for collecting POH information or SOH information of SONET/SDH from the autonomous distributed control path; and an updating process for updating the alarm information managed by the virtual link information managing process based on alarm information included in the POH information or SOH information collected by the collecting process.

### BRIEF DESCRIPTION OF THE DRAWINGS

The objects and features of the present invention will become more apparent from the consideration of the following detailed description taken in conjunction with the accompanying drawings, in which:
Fig. 1 is a diagram showing one example of a configuration of a network system according to an exemplary embodiment of the present invention;
Fig. 2 is a diagram showing in detail one example of links (LK) and labels (LB) of communication devices according to the exemplary embodiment of the present invention;
Fig. 3 is a diagram showing a configuration of a communication device (autonomous distributed control supporting device) according to the exemplary embodiment of the present invention;
Fig. 4 is a diagram showing a configuration of a network management system according to the exemplary embodiment of the present invention;
Fig. 5 is a diagram showing one example of a virtual link information (NMS) management table of the network management system according to the exemplary embodiment of the present invention;
Fig. 6 is a diagram showing one example of a link information management table and a virtual link information management table of an autonomous distributed control supporting device according to the exemplary embodiment of the present invention;
Fig. 7 is a flowchart of an operation of virtual link registration and autonomous distributed control path setting according to the exemplary embodiment of the present invention;
Fig. 8 is a flowchart of an alarm information updating operation at a time when a failure (SF) occurs according to the exemplary embodiment of the present invention;
Fig. 9 is a diagram showing one example of the virtual link information (NMS) management table of the network management device according to the exemplary embodiment of the present invention;
Fig. 10 is a diagram showing one example of the link information management table and the virtual link information management table of the autonomous distributed control supporting device according to the exemplary embodiment of the present invention;
Fig. 11 is a flowchart of an operation of path switching to backup according to the exemplary embodiment of the present invention;
Fig. 12 is a diagram showing in detail one example of links (LK) and labels (LB) of the communication devices according to the exemplary embodiment of the present invention;
Fig. 13 is a flowchart of an alarm information updating operation at a time when recovery from a failure is completed according to the exemplary embodiment of the present invention;
Fig. 14 is a flowchart of an alarm information updating operation at a time when a failure (SD) occurs according to an exemplary embodiment of the present invention;
Fig. 15 is a diagram showing one example of a virtual link information (NMS) management table of the network management device according to the exemplary embodiment of the present invention;
Fig. 16 is a diagram showing one example of the link information management table and the virtual link information management table of the autonomous distributed control supporting device according to the exemplary embodiment of the present invention;
Fig. 17 is a diagram showing one example of a configuration of a network system according to an exemplary embodiment of the present invention;
Fig. 18(A) is diagram showing a minimum configuration of an autonomous distributed control supporting device according to an exemplary embodiment of the present invention; Fig. 18(B) is a diagram showing a minimum configuration of a path management method according to the exemplary embodiment of the present invention;
Fig. 19 is a diagram showing one example of a network composed of communication devices which support autonomous distributed control; and
Fig. 20 is a diagram showing one example of a network composed of communication devices which do not support autonomous distributed control.

### EXEMPLARY EMBODIMENTS

Hereinafter, exemplary embodiments of the present invention will be described in detail with reference to the accompanying drawings.

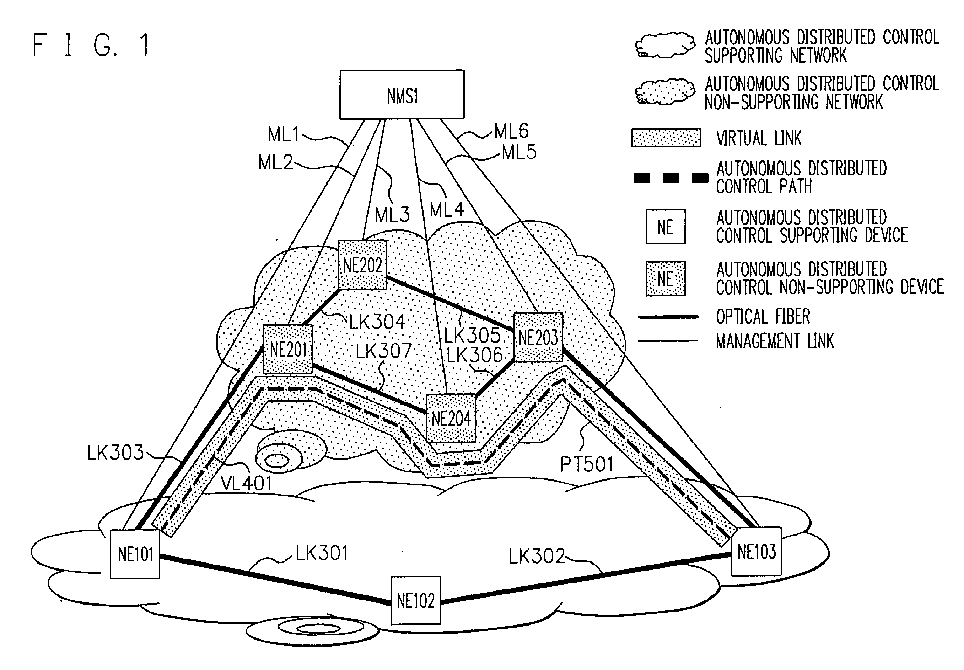

Fig. 1 shows a configuration of one exemplary embodiment of the network system of the present invention. In a network assumed in the present invention, path failure is managed on end-to-end basis using technologies such as packet, TDM (Time Division Multiplexing), and WDM (Wave Length Division Multiplexing). Examples of the network assumed in the present invention include an optical transmission network constructed of a device such as SONET/SDH or WDM, and a connection-typed network which sets a path to start communication. "Path setting" as used herein means reservation of a time slot and a wavelength for a path to be set. Further, a time slot and a wavelength as used herein are referred to as "labels".

In Fig. 1, each communication device (node) NE201 to NE204, NE101 to NE103 performs XC or switching based on label information (time slot, wavelength, etc.). Each communication device is connected with another device through one or more links (optical fibers) LK301 to LK308. In addition, the devices NE201 to NE204, NE101 and NE103 are connected to NMS 1 though management links ML1 to ML6 respectively.

In Fig. 1, the devices NE101 to NE103 are devices supporting GMPLS (hereinafter referred to as a communication device or an autonomous distributed control supporting device), and the devices NE201 to NE204 are devices not supporting GMPLS (hereinafter referred to as a communication device or an autonomous distributed control non-supporting device). The devices NE101 to NE103 exist in an autonomous distributed control supporting network, and the devices NE201 to NE204 exist in an autonomous distributed control non-supporting network. Thus, the environment of the network system of the exemplary embodiment has both an autonomous distributed control supporting network and an autonomous distributed control non-supporting network.

The NMS 1 includes a function of requesting each communication device to perform path setting and disconnection, a function of registering a virtual link with an autonomous distributed control supporting device, and a function of associating an alarm state (to be described later) with a virtual link. The NMS 1 is a system (network management system) which becomes an interface between an operator and a network. The communication devices are connected with the NMS 1 through the management links ML1 to ML6, and setting of the communication devices are performed via these management links ML1 to ML6, respectively.

The autonomous distributed control supporting network shown in Fig. 1 is a network composed of the autonomous distributed control supporting devices NE101 to NE103 which support autonomous distributed control such as GMPLS or ASON. When a path is set in the autonomous distributed control supporting network, each communication device NE101 to NE103 performs routing control and signaling in an autonomous distributed manner according to an instruction of an operator, performs label reservation and switch setting for a respective communication device, and sets a path between specified start and end point communication devices.

The autonomous distributed control non-supporting network shown in Fig. 1 is a network composed of the autonomous distributed control non-supporting devices NE201 to NE 204 which do not support supporting autonomous distributed control such as GMPLS or ASON. When a path is set in the autonomous distributed control non-supporting network, an operator specifies all resources (such as a port and a time slot) constructing the path, and performs switch setting on all communication devices on the route by means of the NMS 1. At a time when XC registration is completed with respect to all the communication devices, the path setting is completed.

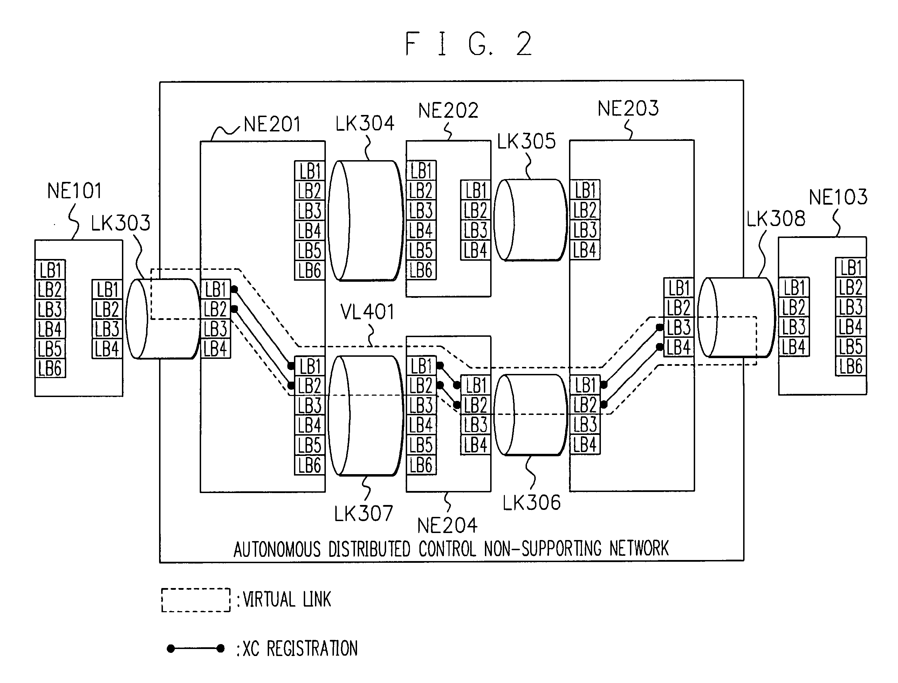

Fig. 2 is a diagram showing in detail links (LK) and labels (LB) of the communication devices (NE101, NE103, NE201 to NE204). A label is an identifier of resource used by a path. Fig. 2 also shows examples of a virtual link and XC registration, which will be described later.

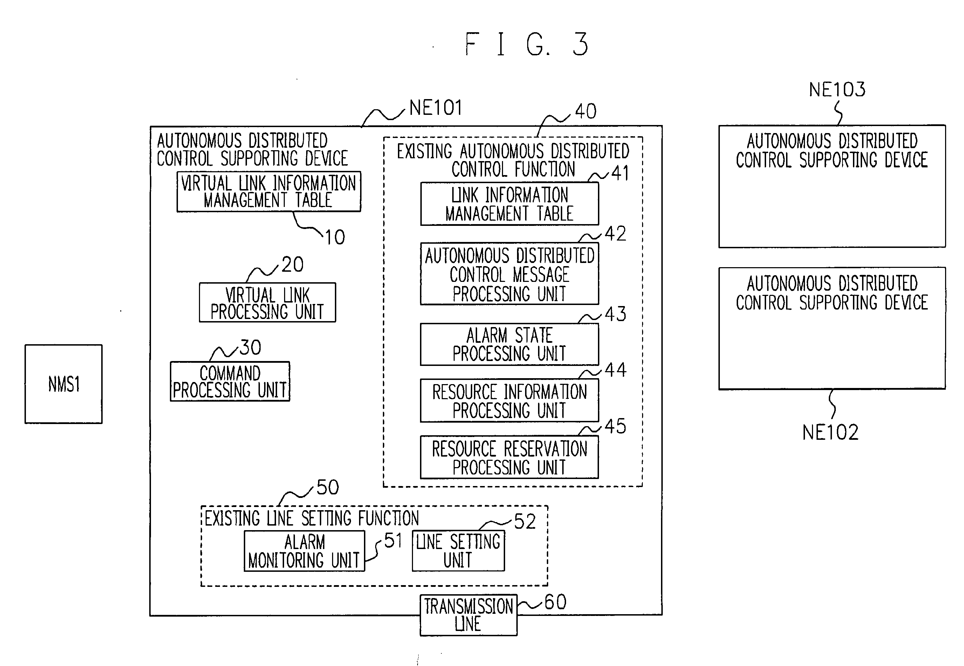

Fig. 3 is a block diagram showing functional configurations of the autonomous distributed control supporting devices NE101 to NE103. The autonomous distributed control supporting devices NE101 to NE103 each include a virtual link information management table 10, a virtual link processing unit 20, a command processing unit 30, an existing autonomous distributed control function 40, an existing line setting function 50, and a transmission line 60. Details of these will be described below.

The virtual link information management table 10 is a table for storing virtual link information (the virtual link information managing means).

The virtual link processing unit 20 generates a virtual link according to a request from the NMS 1. In addition, when a failure occurs at a link or path used for a virtual link, the virtual link processing unit 20 assigns alarm information to a virtual link to update it (the updating means).

The command processing unit 30 sends/receives a message for controlling an autonomous distributed control supporting device to/from the NMS 1. In addition, when information managed by an autonomous distributed control supporting device is changed, the command processing unit 30 notifies the NMS 1 of the changed information (the notifying means).

The existing autonomous distributed control function 40 performs signaling, routing, link management, switching to backup and switching back from it, and the like. The existing autonomous distributed control function 40 includes a link information management table 41, an autonomous distributed control message processing unit 42, an alarm state processing unit 43, a resource information processing unit 44, and a resource reservation processing unit 45. These parts will be described below.

The link information management table 41 manages network resources. When a failure occurs, processing is performed for disabling a link corresponding to the failure (a part of the path setting means).

The autonomous distributed control message processing unit 42 processes a message of the autonomous distributed control function. Specifically, it performs exchange of network resource information with an adjacent node, sending/receiving of a path setting message by autonomous distributed control to/from an adjacent node (a part of the path setting means), sending/receiving of a line switching massage (a part of the path switching means), and the like.

The alarm state processing unit 43 manages an alarm used for the autonomous distributed control function. Such an alarm requests for line setting.

The resource information processing unit 44 updates the link information management table 41 to process information of a node, a link, and a label in the network (a part of the path setting means).

The resource reservation processing unit 45 includes a function of sending a request for setting/cancelling a path of autonomous distributed control to a line setting unit of the own device and an adjacent node (a part of the path setting means).

The existing line setting function 50 is an existing function to control a SONET/SDH (Synchronous Optical NETwork/Synchronous Digital Hierarchy) line. The existing line setting function 50 includes an alarm monitoring unit 51 and a line setting unit 52, which will be described below.

The alarm monitoring unit 51 monitors alarm information on the transmission line 60. Specifically, the alarm monitoring unit 51 collects SOH (Section OverHead) or POH (Path OverHead) of SONET/SDH including the alarm information (the collecting means).

The line setting unit 52 performs setting of the transmission line 60 upon a request from the existing autonomous distributed control function 40 (a part of the path setting means, a part of the path switching means).

The transmission line 60 is composed of an optical fiber and a connection interface, and transmits and receives a transmission signal. In the overhead (OH) of a transmission signal, alarm information about a state of the transmission line is contained.

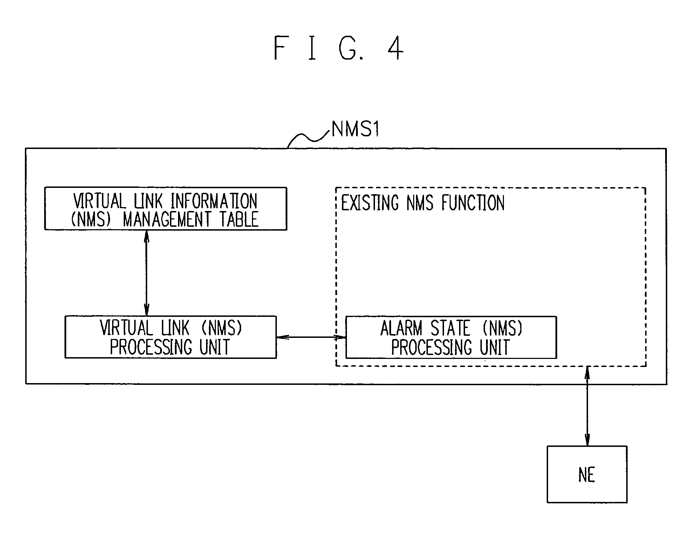

Fig. 4 is a block diagram showing a functional configuration of the NMS 1. The NMS 1 includes a virtual link information (NMS) management table and a virtual link (NMS) processing unit in addition to an existing NMS function. Details of these will be described later.

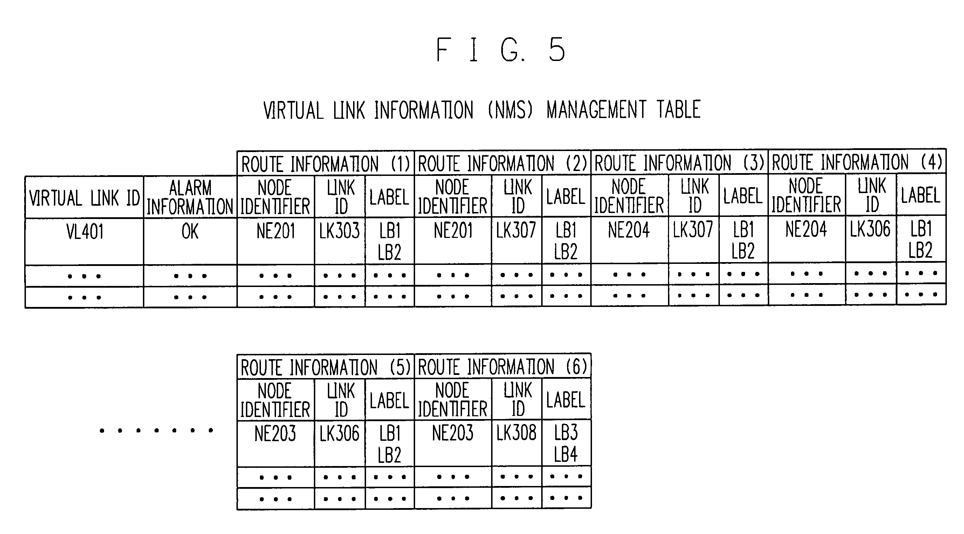

Fig. 5 is a diagram showing one example of the virtual link information (NMS) management table of the NMS 1 shown in Fig. 4. The virtual link information (NMS) management table is means for managing virtual link information indicating a virtual link. The NMS 1 can manage a virtual link using this table. As shown in Fig. 5, in the virtual link information (NMS) management table, virtual link ID is associated with alarm information. Alarm information is information indicating a state of a virtual link. Alarm information can take one of three values: "SD" (Signal Degrade), "SF" (Signal Failure), and "OK" (no failure such as SD and SF). This function is a conventional function of the autonomous distributed control. In Fig. 5, a state where there is no failure occurring in a virtual link VL401 is shown as an example. Also, as shown in Fig. 5, the virtual link information (NMS) management table has route information about a route registered as a virtual link. Each of route information (1) to (6) has a node identifier, a link ID, and a label (actually used label information). In this way, the NMS 1 of the exemplary embodiment associates each of route information with alarm information so that it can manage variation of failure occurring on a path that is set based on a virtual link.

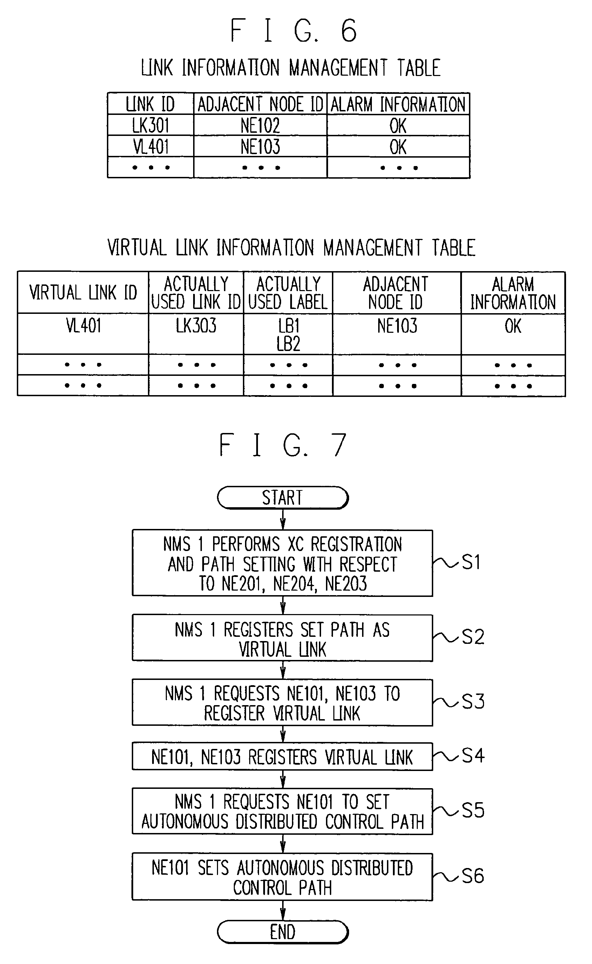

Fig. 6 is a diagram showing examples of the link information management table 41 and the virtual link information management table 10 of the autonomous distributed control supporting device shown in Fig. 3. The link information management table 41 is a function included in the existing autonomous distributed control function 40, and has a link ID, an adjacent node ID, and alarm information. The virtual link information management table 10 is means for managing virtual link information indicating a virtual link. The virtual link information management table 10 has an actually used link ID, an actually used label, an adjacent node ID, and alarm information for each virtual link. Using this virtual link information management table 10, the virtual link processing unit 20 can manage a virtual link and register and change a virtual link in the link information management table 41. In this way, the autonomous distributed control supporting device of the exemplary embodiment associates alarm information with link information in the link information management table and the virtual link information management table so that it can manage variation of failure on a path that is set based on a virtual link.

An operation for setting an autonomous distributed control path using a virtual link in the network system shown in Fig. 1 will now be described in detail with reference to Figs. 1 and 7. In the following example, a virtual link (NE201-NE204-NE203) is registered on an autonomous distributed control non-supporting network, and an autonomous distributed control path is set between the devices NE101 and NE103 using the registered virtual link.

First, a virtual link is registered. As used herein, a virtual link is a link intended for an autonomous distributed control supporting device to deal with band resources of an autonomous distributed control non-supporting network, and is a TE link, which is a logical link. When TE Link is applied, a plurality of links between predetermined nodes can be assumed to be one link, and a line via a plurality of nodes, for example, "node A - node B - node C", can be assumed to be one link.

In Fig. 1, the NMS 1 performs XC registration with respect to the devices NE201, NE204, NE203 on the autonomous distributed control non-supporting network, and sets a path (NE201 - NE204 - NE203) (step S1 in Fig. 7). At this time, the NMS 1 specifies links and labels of the devices NE201, NE204, NE203. The state where the XC registration has been done is shown in Fig. 2.

Then, the NMS 1 registers the set path (NE201 - NE204 - NE203) as the virtual link VL401 in the virtual link information (NMS) management table shown in Fig. 4 (step S2 in Fig. 7). The state where the virtual link has been registered is shown in Fig. 5. As shown in Fig. 5, virtual link ID "VL401" is associated with alarm information "OK" in the virtual link information (NMS) management table. Further, virtual link ID "VL401" is associated with route information (1) to (6) corresponding to routes forming the virtual link VL401. Each of route information (1) to (6) is associated with a node identifier, a link ID, and a label (actually used label information). In Fig. 5, for example, route information (1) indicates a link (LK303) which is the starting point of the virtual link, and route information (6) indicates a link (LK308) which is the end point of the virtual link. In this way, the NMS 1 manages the path (NE201 - NE204 - NE203) which is set in the autonomous distributed control non-supporting network, as the virtual link (NE101 - NE201 - NE204 - NE203 - NE103).

The NMS 1 specifies and sends the above virtual link information (Fig. 5) and an adjacent node ID and a request for registration of the virtual link VL401 to the autonomous distributed control supporting devices NE101 and NE103 (step S3 in Fig. 7). The adjacent node ID to be sent to the device NE101 is the end point of the virtual link "NE103", and the adjacent node ID to be sent to the device NE103 is the starting point of the virtual link "NE101". A method for the NMS 1 to manage a path and XC that are not compliant with autonomous distributed control is not directly related to the present invention, and detailed description thereof is omitted.

When receiving the virtual link registration request, virtual link information and an adjacent node ID from the NMS 1, the autonomous distributed control supporting devices NE101 and NE103 perform registration of the virtual link VL401 (step S4 in Fig. 7). Although the registration of the virtual link by the device NE101 shown in Fig. 3 will be described below as an example, the device NE103 also performs virtual link registration in the same manner as in the following description.

The command processing unit 30 receives the virtual link registration request, virtual link information, and adjacent node ID from the NMS 1. Then, the command processing unit 30 requests the line setting unit 52 to set a path according to the received virtual link information (node identifier, link ID, and label). At this time, the command processing unit 30 sends the virtual link information received from the NMS 1 to the line setting unit 52.

Upon receiving the request for path setting, the line setting unit 52 performs setting to allow a transmission signal to be transmitted through the transmission line 60, according to the virtual link information (node identifier, link ID, and label) received at the same time as the request.

Next, the command processing unit 30 requests the virtual link processing unit 20 to create the virtual link information management table 10 based on the virtual link information and adjacent node ID received from the NMS 1. At this time, the command processing unit 30 sends the virtual link information and adjacent node ID received from the NMS 1 to the virtual link processing unit 20.

Upon receiving the request for creation of the virtual link information management table 10, the virtual link processing unit 20 records the link ID, label and adjacent node ID, and alarm information in association with each other based on the virtual link information and adjacent node ID received at the same time as the request. Thereby, the virtual link information management table 10 is created and the virtual link VL401 is registered. The virtual link information management table 10 at this time is shown in the lower part of Fig. 6.

Then, the virtual link processing unit 20 requests the resource information processing unit 44 to register a link. At this time, the virtual link processing unit 20 sends the virtual link information and adjacent node ID to the resource information processing unit 44.

Upon receiving the request for link registration, the resource information processing unit 44 records the link ID (virtual link ID) and adjacent node ID, and alarm information in association with each other in the link information management table 41 based on the virtual link information and adjacent node ID received at the same time as the request. Thereby, the virtual link VL401 is registered as a link. The link information management table 41 in this instance is shown in the upper part of Fig. 6. A total bandwidth and a remaining bandwidth may be recorded during the recording into the link information management table 41.

Thereby, the autonomous distributed control supporting devices NE101 and NE103 can manage the path (NE201 - NE204 - NE203) which is set in the autonomous distributed control non-supporting network, as the virtual link (NE101 - NE201 - NE204 - NE203 - NE103). Specifically, the virtual link VL401 recorded in the link information management tables in the both end nodes (NE101, NE103) of the virtual link is advertised in the autonomous distributed control network and used for route calculation as with a normal link (physically connected link).

After the virtual link registration in the devices NE101 and NE103, setting of an autonomous distributed control path is performed. The NMS 1 sends a request for autonomous distributed control path setting to an autonomous distributed control supporting device (for example, NE101) which is the starting point of a path (between the devices NE101 and NE103, the number of labels is two) that an operator wants to set (step S5 in Fig. 7). This request for autonomous distributed control path setting includes information of the end node, bandwidth, and the like of the path. Upon receiving the request for autonomous distributed control path setting, the device NE101 performs route calculation and signaling by the normal autonomous distributed control mechanism (see Fig. 19), and sets an autonomous distributed control path (NE101 - NE202 - NE204 - NE203 - NE103) (step S6 in Fig. 7). Thereby, the autonomous distributed control path PT501 is opened as shown in Fig. 1. Setting of an autonomous distributed control path at the device NE101 shown in Fig. 3 will be described in detail below.

The command processing unit 30 receives a request for setting of an autonomous distributed control path using the virtual link VL401 and information of the autonomous distributed control path from the NMS 1. The information of the autonomous distributed control path is setting information including a section of path setting (e.g., between NE101 and NE103) and the number of labels to be used (e.g., two). Then, the command processing unit 30 requests the resource reservation processing unit 45 to set the autonomous distributed control path based on the setting information. At this time, the command processing unit 30 also sends the setting information to the resource reservation processing unit 45.

Upon receiving the request for autonomous distributed control path setting, the resource reservation processing unit 45 inquires of the resource information processing unit 44 whether the virtual link VL401 is available or not.

Upon receiving the inquiry, the resource information processing unit 44 recognizes whether the virtual link VL401 is available or not with reference to the link information management table 41. If the virtual link VL401 is registered and alarm information is "OK" in the link information management table 41, the resource information processing unit 44 recognizes that the virtual link VL401 is available. In this example, the virtual link VL401 is registered and alarm information is "OK" in the link information management table 41 as shown in the upper part of Fig. 6. Therefore, the resource information processing unit 44 recognizes that the virtual link VL401 is available. Then, the resource information processing unit 44 notifies the resource reservation processing unit 45 that the virtual link VL401 is available as a response.

Upon receiving the notification that the virtual link VL401 is available, the resource reservation processing unit 45 sends a request for autonomous distributed control path setting to the autonomous distributed control message processing unit 42. At this time, the resource reservation processing unit 45 also sends setting information to the autonomous distributed control message processing unit 42.

Upon receiving the request for autonomous distributed control path setting, the autonomous distributed control message processing unit 42 requests the device NE103 adjacent on the route to set the autonomous distributed control path based on the setting information received at the same time as the request.

Then, the resource reservation processing unit 45 sends a request for line setting to the line setting unit 52.

Upon receiving the request for line setting, the line setting unit 52 sets a line on the transmission line 60. Thereby, the autonomous distributed control path PT501 is opened as shown in Fig. 1.

As described above, path setting can be performed by autonomous distributed control in a network including both an autonomous distributed control supporting device and an autonomous distributed control non-supporting device. Therefore, even in a network including both an autonomous distributed control supporting device and an autonomous distributed control non-supporting device, the advantages of path setting by autonomous distributed control can be obtained, for example, operational cost can be reduced, and flexible path route selection and failure recovery means can be provided. The advantages are achieved because the NMS has a mechanism which handles a path that is set in an autonomous distributed control non-supporting device as a virtual link and autonomous distributed control supporting devices have a mechanism which handles such a virtual link as a normal link.

Hereinafter, an operation in a case where a failure occurs on the virtual link VL401 (autonomous distributed control path PT501) which has been set in the network system shown in Fig. 1 (an exemplary embodiment of the path management method according to the present invention) will be described in detail.

### [First exemplary embodiment]

As a first exemplary embodiment, a case where a failure (SF as an example) occurs, for example, in the link LK303 between the devices NE101 and NE201 will be described first.

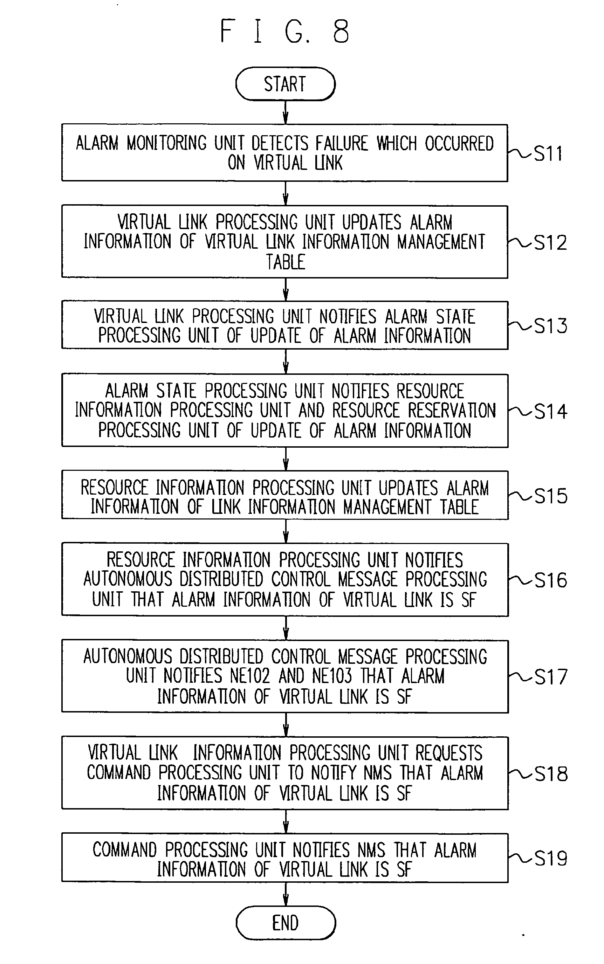

An operation for updating alarm information corresponding to virtual link information (one example of the path management method) will first be described with reference to Fig. 8. For example, when a failure occurs in the link LK303, the alarm information updating operation shown in Fig. 8 is performed at the autonomous distributed control supporting device NE101 shown in Fig. 3.

The alarm monitoring unit 51 is collecting alarm information of the transmission line 60 (the autonomous distributed control path PT501 that is set in the virtual link VL401) from Section OverHead (SOH). The alarm monitoring unit 51 can collect information in units of optical fibers that are set between nodes from SOH. For example, when failure SF occurs in the link LK303, information in SOH is changed such that it indicates the link LK303 has SF. The alarm monitoring unit 51 recognizes (detects) that the link LK303 has SF from collected SOH information (step S11 in Fig. 8). Then, the alarm monitoring unit 51 notifies the virtual link processing unit 20 of link ID "LK303" and alarm information "SF". Thereby, the virtual link processing unit 20 is notified that SF has occurred on the link LK303. The link ID and alarm information sent as notification here are information about failure included in SOH (Section OverHead) of SONET/SDH (also referred to as an existing link alarm).

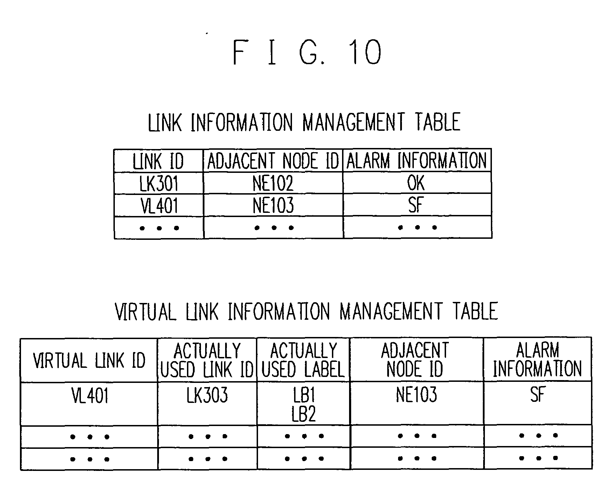

Then, the virtual link processing unit 20 updates the virtual link information management table 10 based on the received link ID and alarm information (step S12 in Fig. 8). Specifically, the virtual link processing unit 20 identifies the virtual link having the failure using the received link ID "LK303" in the virtual link information management table shown in Fig. 6. The virtual link identified here is "VL401". Then, the virtual link processing unit 20 updates alarm information associated with the identified virtual link "VL401" to change the alarm information from "OK" to "SF" in the virtual link information management table shown in Fig. 6. The state of the updated virtual link information management table is shown in the lower part of Fig. 10.

During the update of the virtual link information management table, the virtual link processing unit 20 replaces an existing link alarm sent from the alarm monitoring unit 51 with information about failure which can be recognized by the autonomous distributed control supporting device NE101 (also referred to as a GMPLS alarm). This GMPLS alarm becomes a trigger which causes update of LSDB (Link State Data Base) of OSPF (Open Shortest Path First), switching of a line, and the like. In this way, the autonomous distributed control supporting device NE101 recognizes that failure "SF" occurs in the virtual link VL401.

Then, the virtual link processing unit 20 notifies the alarm state processing unit 43 that the alarm information of the virtual link VL401 is changed to SF (step S13 in Fig. 8).

Then, the alarm state processing unit 43 notifies the resource information processing unit 44 and the resource reservation processing unit 45 that the alarm information of the virtual link VL401 is changed to SF (step S14 in Fig. 8).

Then, the resource information processing unit 44 updates alarm information associated with link ID "VL401" to change the alarm information from "OK" to "SF" in the link information management table shown in the upper part of Fig. 6 (step S15 in Fig. 8). The state of the updated link information management table is shown in the upper part of Fig. 10.

Then, the resource information processing unit 44 notifies the autonomous distributed control message processing unit 42 that the alarm information of VL401 is SF (step S16 in Fig. 8).

Then, the autonomous distributed control message processing unit 42 notifies all nodes on the autonomous distributed control supporting network that the alarm information of VL401 is SF (step S17 in Fig. 8). In this case, the device NE101 notifies the devices NE120 and NE103.

Then, the virtual link processing unit 20 requests the command processing unit 30 to provide a notification that the alarm information of VL401 is SF (step S18 in Fig. 8).

Upon receiving the notification request, the command processing unit 30 notifies the NMS 1 that the alarm information of VL401 is SF (step S19 in Fig. 8). In this case, the command processing unit 30 sends a request for virtual link information update, and virtual link ID "VL401", link ID "LK303", alarm information "SF", and the like.

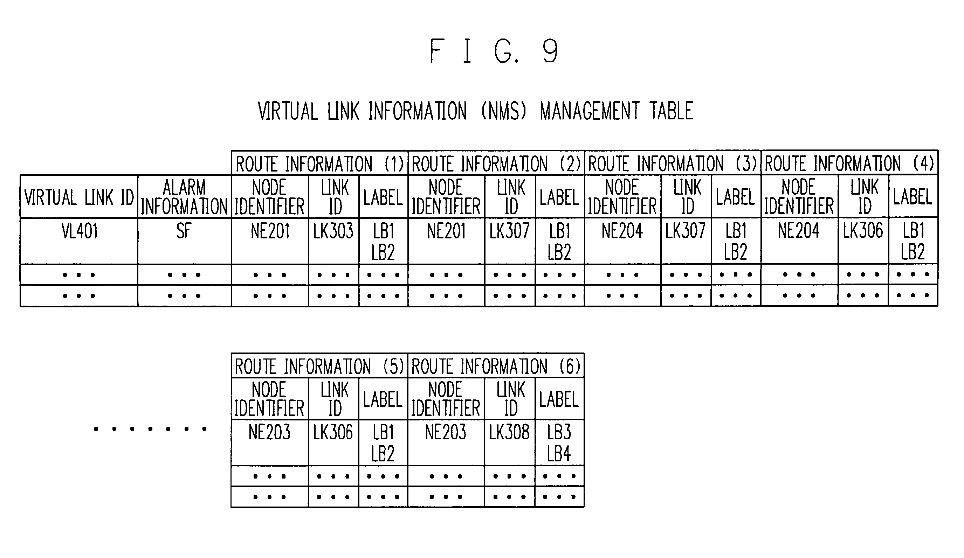

In the NMS 1 shown in Fig. 4, the virtual link (NMS) processing unit updates the virtual link information (NMS) management table based on the link ID "LK303" and alarm information "SF" received from the autonomous distributed control supporting device NE101. Specifically, the virtual link (NMS) processing unit identifies the virtual link having the failure using virtual link ID "VL401" in the virtual link information (NMS) management table shown in Fig. 5. The virtual link identified here is "VL401". Then, the virtual link (NMS) processing unit changes alarm information associated with virtual link ID "VL401" from "OK" to "SF". The updated virtual link information (NMS) management table is shown in Fig. 9.

In this way, an occurrence of failure in an autonomous distributed control path that is via an autonomous distributed control non-supporting device can be recognized in a network including both an autonomous distributed control supporting device and an autonomous distributed control non-supporting device.

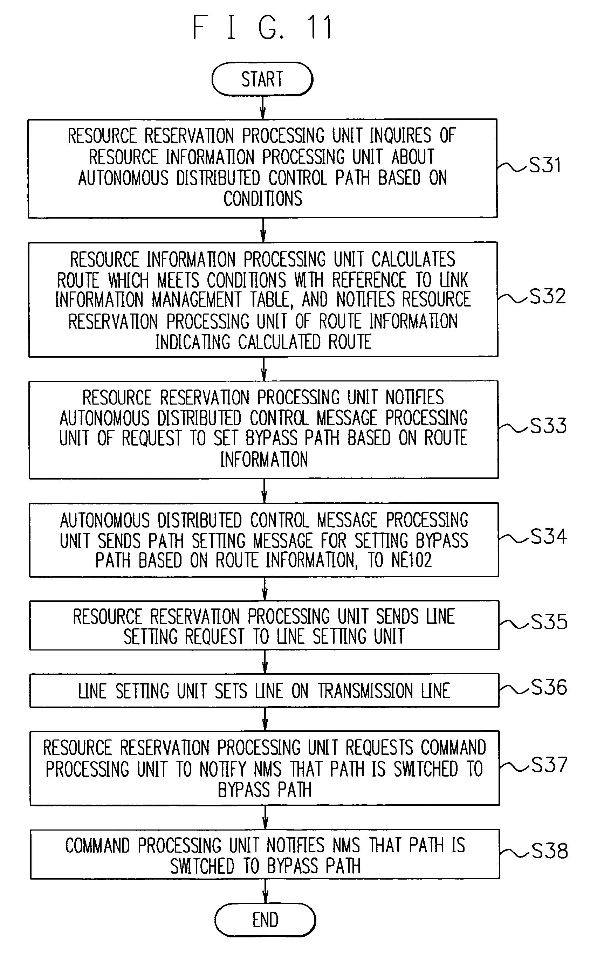

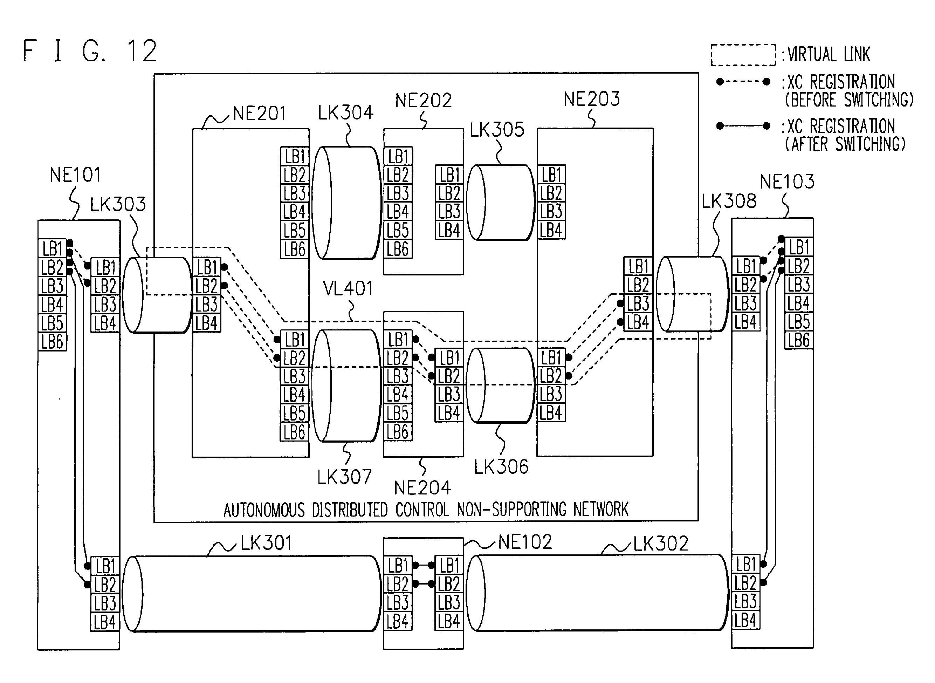

Next, an operation of path switching to backup (one example of the path management method) will be described as an example operation after the operation shown in Fig. 8, with reference to Figs. 11 and 12. The term "switching to backup" as used herein refers to an operation for switching from an autonomous distributed control path that has been set by the path setting method described in Fig. 7 to another autonomous distributed control path (a bypass path as a backup channel, for example, NE101 - NE102 - NE103). In other words, it means "switching from a path set before occurrence of a failure to a path set after the occurrence of the failure".

While the autonomous distributed control supporting device NE101 performs path switching to backup, conditions required for switching of the autonomous distributed control path PT501 to backup are that the starting point is NE101; the end point is NE103; and the number of used labels is two. Therefore, the device NE101 performs calculation of a bypass path assuming that the device NE101 is the starting point, the device NE103 is the end point, and the number of used labels is two. As a result, a route NE101 - NE102 - NE103 is found. The device NE101 performs signaling using this route and sets the autonomous distributed control path (NE101 - NE102 - NE103) which becomes a bypass path. This autonomous distributed control path (NE101 - NE102 - NE103) is used as the bypass path during the occurrence of failure "SF".

As described in Fig. 7, the resource reservation processing unit 45 recognizes the occurrence of failure SF in the set autonomous distributed control path PT 501 by the notification from the alarm state processing unit 43. Therefore, the resource reservation processing unit 45 attempts to switch the autonomous distributed control path PT501 to a backup channel (bypass path).

First, the resource reservation processing unit 45 inquires of the resource information processing unit 44 about a route of an autonomous distributed control path which meets the conditions that "the starting point is NE101, the end point is NE103, and the number of used labels is two" (step S31 in Fig. 11).

Then, the resource information processing unit 44 calculates a route which meets the conditions with reference to the link information management table 41 which is managing resources in the autonomous distributed control network. Consequently, the resource information processing unit 44 obtains a result that the route NE101 - NE102 - NE103 is available using the device NE102, the links LK301, LK302, and labels L1, L2 as shown in Fig. 12. The resource information processing unit 44 then sends route information indicating the calculated route to the resource reservation processing unit 45 (step S32 in Fig. 11).

Then, the resource reservation processing unit 45 sends a request to set the autonomous distributed control path (bypass path) based on the route information as well as the route information, to the autonomous distributed control message processing unit 42 (step S33 in Fig. 11).

Then, the autonomous distributed control message processing unit 42 sends a request to set the autonomous distributed control path (bypass path) based on the route information (the path setting message shown in Fig. 19) to the device NE102 adjacent on the route indicated by the route information (step S34 in Fig. 11). The device NE102 sends the path setting message to the device NE103.

Then, the resource reservation processing unit 45 sends a line setting request to the line setting unit 52 (step S35 in Fig. 11).

Then, the line setting unit 52 sets a line in the transmission line 60 (in this case, the route indicated by the route information) (step S36 in Fig. 11).

Then, the resource reservation processing unit 45 requests the command processing unit 30 to send notification information indicating that the set autonomous distributed control path PT501 is switched to the backup bypass path (NE101 - NE102 - NE103) to the NMS 1 (step S37 in Fig. 11).

Then, the command processing unit 30 sends notification information indicating that the set autonomous distributed control path PT501 is switched to the backup bypass path (NE101 - NE102 - NE103) to the NMS 1 (step S38 in Fig. 11).

In this way, a preset autonomous distributed control path can be switched to another autonomous distributed control path (backup bypass path).

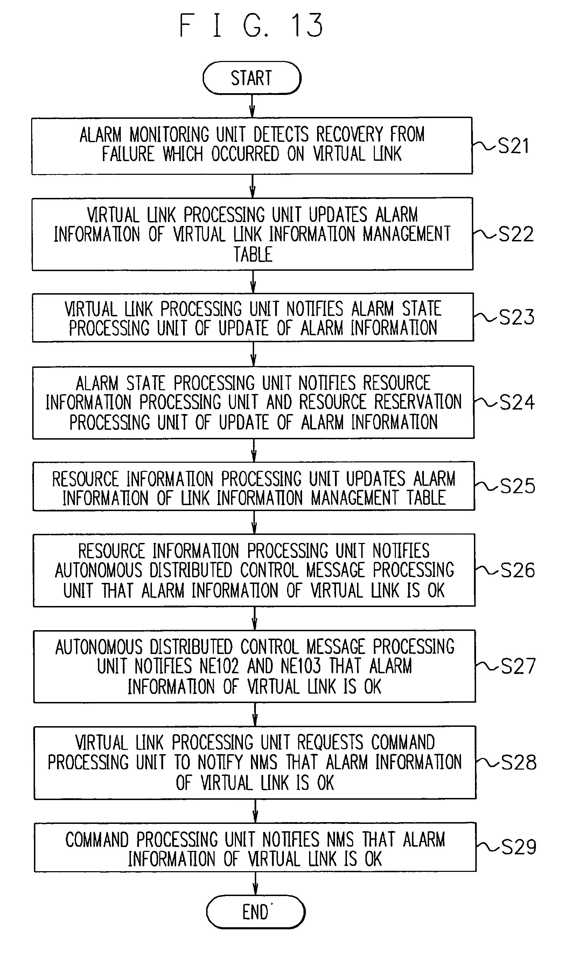

Next, an operation for updating alarm information when recovery from failure is completed (one example of the path management method) will be described with reference to Fig. 13. When recovery from failure "SF" in the link LK303 is completed, an operation for updating alarm information shown in Fig. 13 is performed at the autonomous distributed control supporting device NE101 shown in Fig. 3.

As described with reference to Fig. 8, the alarm monitoring unit 51 is collecting alarm information of the transmission line 60 (the autonomous distributed control path PT501 that is set in the virtual link VL401) from Section OverHead (SOH). The alarm monitoring unit 51 can collect information in units of optical fibers that are set between nodes from SOH. For example, when recovery from failure "SF" in the link LK303 is completed, information in SOH is changed such that it indicates the link LK303 is OK. The alarm monitoring unit 51 recognizes (detects) that the link LK303 is OK from collected SOH information (step S21 in Fig. 13). Then, the alarm monitoring unit 51 notifies the virtual link processing unit 20 of link ID "LK303" and alarm information "OK". Thereby, the virtual link processing unit 20 is notified that recovery from failure SF in the link LK303 is completed. The link ID and alarm information sent as notification here are information about failure included in SOH (Section OverHead) of SONET/SDH (also referred to as an existing link alarm).

Then, the virtual link processing unit 20 updates the virtual link information management table 10 based on the received link ID and alarm information (step S22 in Fig. 13). Specifically, the virtual link processing unit 20 identifies the virtual link having the failure using the received link ID "LK303" in the virtual link information management table shown in Fig. 10. The virtual link identified here is "VL401". Then, the virtual link processing unit 20 updates alarm information associated with the identified virtual link "VL401" to change the alarm information from "SF" to "OK" in the virtual link information management table shown in Fig. 10. The state of the updated virtual link information management table is shown in the lower part of Fig. 6.

During the update of the virtual link information management table, the virtual link processing unit 20 replaces an existing link alarm sent from the alarm monitoring unit 51 with information about failure which can be recognized by the autonomous distributed control supporting device NE101 (also referred to as a GMPLS alarm). This GMPLS alarm becomes a trigger which causes update of LSDB (Link State Data Base) of OSPF (Open Shortest Path First), switching of a line, and the like. In this way, the autonomous distributed control supporting device NE101 recognizes that recovery from failure "SF" in the virtual link LK401 is completed ("OK").

Then, the virtual link processing unit 20 notifies the alarm state processing unit 43 that the alarm information of the virtual link VL401 is changed to OK (step S23 in Fig. 13).

Then, the alarm state processing unit 43 notifies the resource information processing unit 44 and the resource reservation processing unit 45 that the alarm information of the virtual link VL401 is changed to OK (step S24 in Fig. 13).

Then, the resource information processing unit 44 updates alarm information associated with link ID "VL401" to change the alarm information from "SF" to "OK" in the link information management table shown in the upper part of Fig. 10 (step S25 in Fig. 13). The state of the updated link information management table is shown in the upper part of Fig. 6.

Then, the resource information processing unit 44 notifies the autonomous distributed control message processing unit 42 that the alarm information of VL401 is OK (step S26 in Fig. 13).

Then, the autonomous distributed control message processing unit 42 notifies all nodes on the autonomous distributed control supporting network that the alarm information of VL401 is OK (step S27 in Fig. 13). In this case, the device NE101 notifies the devices NE120 and NE103.

Then, the virtual link processing unit 20 requests the command processing unit 30 to provide a notification that the alarm information of VL401 is OK (step S28 in Fig. 13).

Upon receiving the notification request, the command processing unit 30 notifies the NMS 1 that the alarm information of VL401 is OK (step S29 in Fig. 13). In this case, the command processing unit 30 sends a request for virtual link information update, and virtual link ID "VL401", link ID "LK303", alarm information "OK", and the like.

In the NMS 1 shown in Fig. 4, the virtual link (NMS) processing unit updates the virtual link information (NMS) management table based on the link ID "LK303" and alarm information "OK" received from the autonomous distributed control supporting device NE101. Specifically, the virtual link (NMS) processing unit identifies the virtual link having the failure using virtual link ID "VL401" in the virtual link information (NMS) management table shown in Fig. 9. The virtual link identified here is "VL401". Then, the virtual link (NMS) processing unit changes alarm information associated with virtual link ID "VL401" from "OK" to "SF". The updated virtual link information (NMS) management table is shown in Fig. 5.

In this way, recovery from failure in an autonomous distributed control path that is via an autonomous distributed control non-supporting device can be recognized in a network including both an autonomous distributed control supporting device and an autonomous distributed control non-supporting device.

Next, the autonomous distributed control supporting device NE101 performs an operation for switching back to a path (one example of the path management method), which is an example operation performed after the operation shown in Fig. 13. The term "switching back" as used herein refers to an operation for switching from an autonomous distributed control path (bypass path) which has been set by the path switching to backup described in Fig. 11 to an autonomous distributed control path which has been set by the path setting method described in Fig. 7. In other words, it means "switching from a path set after occurrence of a failure to a path set before the occurrence of the failure". Since this path switching back operation is similar to the operation for autonomous distributed control path setting in step S6 in Fig. 7, a description thereof is omitted here.

In this way, a bypass path (NE101 - NE102 - NE103) which has been set after occurrence of a failure can be switched back to the autonomous distributed control path PT501 which has been set before the occurrence of the failure.

As described above, the autonomous distributed control supporting device of the exemplary embodiment has a function of associating virtual link information with an alarm state (alarm information). Therefore, the autonomous distributed control supporting device of the exemplary embodiment can recognize and manage a state (occurrence of failure and recovery from failure) of an autonomous distributed control non-supporting network in a network including both an autonomous distributed control supporting device and an autonomous distributed control non-supporting device. Accordingly, switching to backup and switching back by autonomous distributed control are allowed.

### [Second exemplary embodiment]

In the above described first exemplary embodiment, alarm information about the link LK303 directly connected to the own device NE101 is provided as notification. In the second exemplary embodiment, an alarm state of path failure is managed. In the following description, a case where a failure (SD, as an example) occurs in the link LK307 between the devices NE201 and NE204 in the network system shown in Fig. 1 will be described as an example.

"SD" indicates degradation of signal quality. Because SD is generally less important than SF as failure, there may be a setting in which line switching is not performed even if SD occurs in a line. However, it is assumed here that line switching is performed when SD occurs as in the case where SF occurs.

In the exemplary embodiment, the alarm monitoring unit 51 collects alarm information of Path OverHead (POH) from the transmission line 60. First, a general method for collecting alarm information from POH will be described using Fig. 1. Each link is composed of two physical lines (optical fibers or the like). The two lines are used for uplink and downlink of communication respectively. Alarm information of POH can be detected only by a receiving side, and the coverage of the alarm information is limited to lines upstream from the receiving side. It is assumed here that a failure occurs in a line of the link LK 307 directed from NE204 to NE201. The device NE201 recognizes degradation of line quality, and adds SD to alarm information of POH of a path used for the virtual link VL401. This POH information is transferred to the device NE101 which is downstream therefrom. From this information, the alarm monitoring unit 51 of the device NE101 recognizes that failure SD has occurred in any path which uses labels LB1, LB2 of the link LK303, that is, one of links LK303, LK307, LK306, LK308.

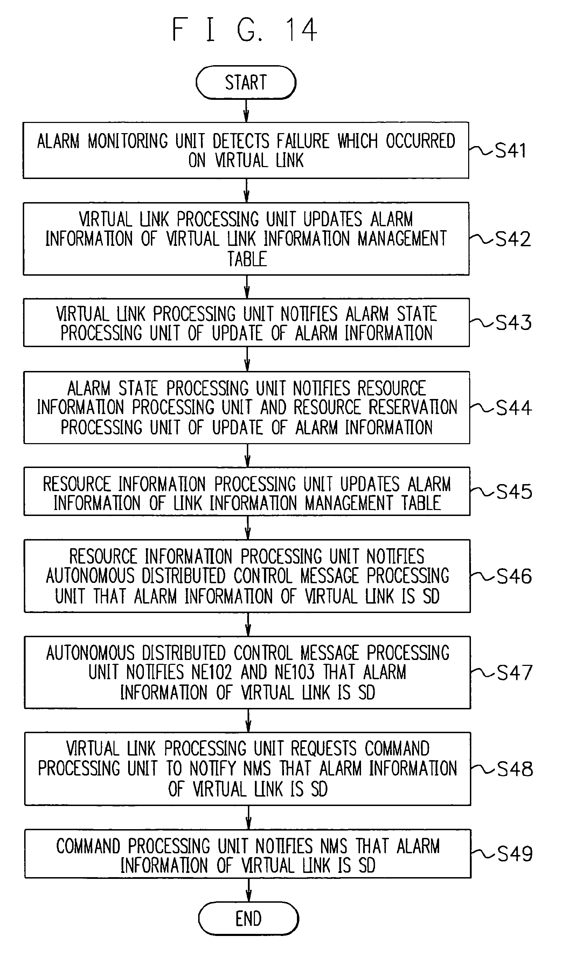

An operation for updating alarm information corresponding to virtual link information (one example of the path management method) will first be described with reference to Fig. 14. For example, when a failure occurs in the link LK307, the alarm information updating operation shown in Fig. 14 is performed at the autonomous distributed control supporting device NE101 shown in Fig. 3.

The alarm monitoring unit 51 is collecting alarm information of the transmission line 60 (the autonomous distributed control path PT501 that is set in the virtual link VL401) from POH. It is assumed, for example, that failure SD occurs in a line of the link LK 307 directed from NE204 to NE201 as described above. The device NE201 recognizes degradation of line quality, and adds SD to alarm information of POH of a path used for the virtual link VL401. This POH information is transferred to the device NE101 which is downstream therefrom. From this information, the alarm monitoring unit 51 of the device NE101 recognizes (detects) that failure SD has occurred in any path which uses labels LB1, LB2 of the link LK303, (i.e., one of links LK303, LK307, LK306, LK308) (step S41 in Fig. 14). Then, the alarm monitoring unit 51 notifies the virtual link processing unit 20 of link ID "LK303", label information "LB1, LB2", and alarm information "SD". Thereby, the virtual link processing unit 20 is notified that SD has occurred on a path that uses the labels LB1, LB2 of the link LK303. The link ID, label information, and alarm information sent as notification here are information about failure included in POH of SONET/SDH (also referred to as an existing path alarm).

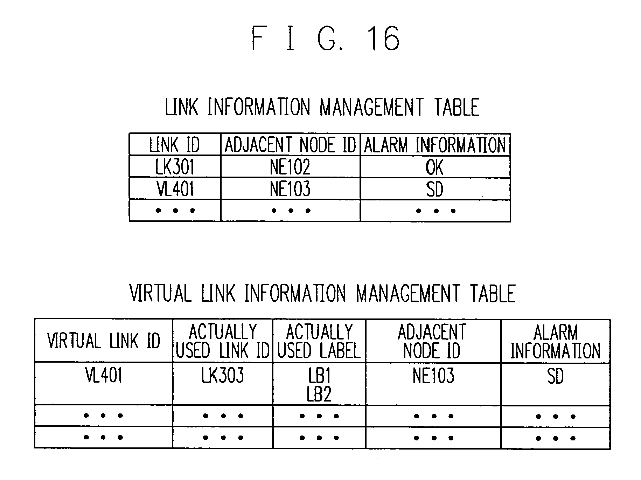

Then, the virtual link processing unit 20 updates the virtual link information management table 10 based on the received link ID, label information "LB1, LB2", and alarm information (step S42 in Fig. 14). Specifically, the virtual link processing unit 20 identifies the virtual link having the failure using the received link ID "LK303" and label information "LB1, LB2" in the virtual link information management table shown in Fig. 6. The virtual link identified here is "VL401". Then, the virtual link processing unit 20 updates alarm information associated with the identified virtual link "VL401" to change the alarm information from "OK" to "SD" in the virtual link information management table shown in Fig. 6. The state of the updated virtual link information management table is shown in the lower part of Fig. 16.

During the update of the virtual link information management table, the virtual link processing unit 20 replaces an existing path alarm sent from the alarm monitoring unit 51 with information about failure which can be recognized by the autonomous distributed control supporting device NE101 (also referred to as a GMPLS alarm). This GMPLS alarm becomes a trigger which causes update of LSDB (Link State Data Base) of OSPF (Open Shortest Path First), switching of a line, and the like. In this way, the autonomous distributed control supporting device NE101 recognizes that failure "SD" occurs in the virtual link VL401.

Then, the virtual link processing unit 20 notifies the alarm state processing unit 43 that the alarm information of the virtual link VL401 is changed to SD (step S43 in Fig. 14).

Then, the alarm state processing unit 43 notifies the resource information processing unit 44 and the resource reservation processing unit 45 that the alarm information of the virtual link VL401 is changed to SD (step S44 in Fig. 14).

Then, the resource information processing unit 44 updates alarm information associated with link ID "VL401" to change the alarm information from "OK" to "SD" in the link information management table shown in the upper part of Fig. 6 (step S45 in Fig. 14). The state of the updated virtual link information management table is shown in the upper part of Fig. 16.

Then, the resource information processing unit 44 notifies the autonomous distributed control message processing unit 42 that the alarm information of VL401 is SD (step S46 in Fig. 14).

Then, the autonomous distributed control message processing unit 42 notifies all nodes on the autonomous distributed control supporting network that the alarm information of VL401 is SD (step S47 in Fig. 14). In this case, the device NE101 notifies the devices NE120 and NE103.

Then, the virtual link processing unit 20 requests the command processing unit 30 to provide a notification that the alarm information of VL401 is SD (step S48 in Fig. 14).

Upon receiving the notification request, the command processing unit 30 notifies the NMS 1 that the alarm information of VL401 is SD (step S49 in Fig. 14). In this case, the command processing unit 30 sends a request for virtual link information update, and virtual link ID "VL401", link ID "LK303", alarm information "SD", and the like.

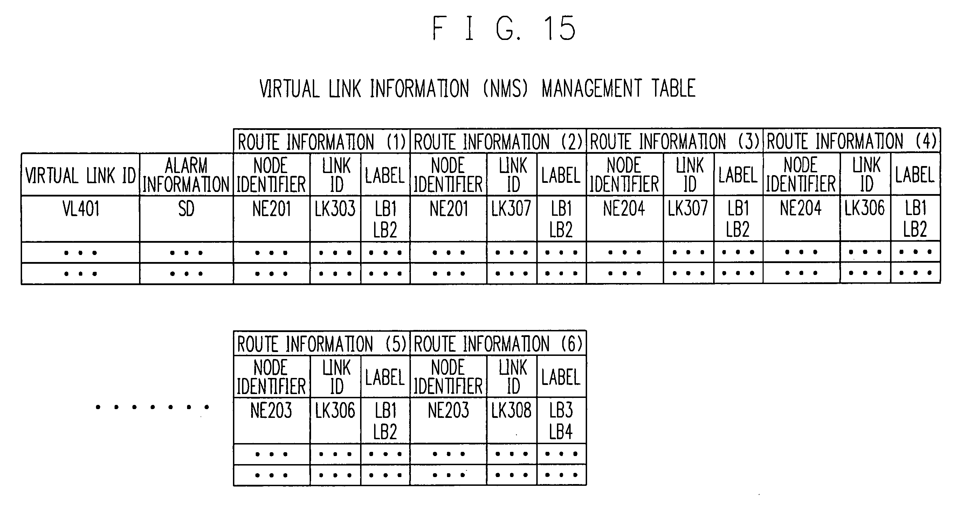

In the NMS 1 shown in Fig. 4, the virtual link (NMS) processing unit updates the virtual link information (NMS) management table based on the link ID "LK303" and alarm information "SF" received from the autonomous distributed control supporting device NE101. Specifically, the virtual link (NMS) processing unit identifies the virtual link having the failure using virtual link ID "VL401" in the virtual link information (NMS) management table shown in Fig. 5. The virtual link identified here is "VL401". Then, the virtual link (NMS) processing unit changes alarm information associated with virtual link ID "VL401" from "OK" to "SD". The updated virtual link information (NMS) management table is shown in Fig. 15.

In this way, an occurrence of failure on an autonomous distributed control path that is via an autonomous distributed control non-supporting device can be recognized in a network including both an autonomous distributed control supporting device and an autonomous distributed control non-supporting device. Therefore, the autonomous distributed control supporting device of the exemplary embodiment can manage not only a failure of a link directly connected to the own device but also a state (occurrence of path failure) in an autonomous distributed control non-supporting network.

Each operation to be performed after the above described operation of Fig. 14 can be performed as in the first exemplary embodiment. In other words, also in the exemplary embodiment, the operation of path switching to backup, the alarm information updating operation at a time when recovery from failure SD is completed, and the path switching back operation at a time when recovery from failure SD is completed can be performed after the operation of Fig. 14. Since these operations are similar to those described in the first exemplary embodiment, a description thereof is omitted here.

### [Third exemplary embodiment]

Although in the foregoing description, a virtual link to be registered in Fig. 1 is only one link VL401, a plurality of virtual links can be registered and thus a plurality of autonomous distributed control path can be set in a network system of the exemplary embodiment. Hereinafter, an example in which a plurality of virtual links are registered will be described.

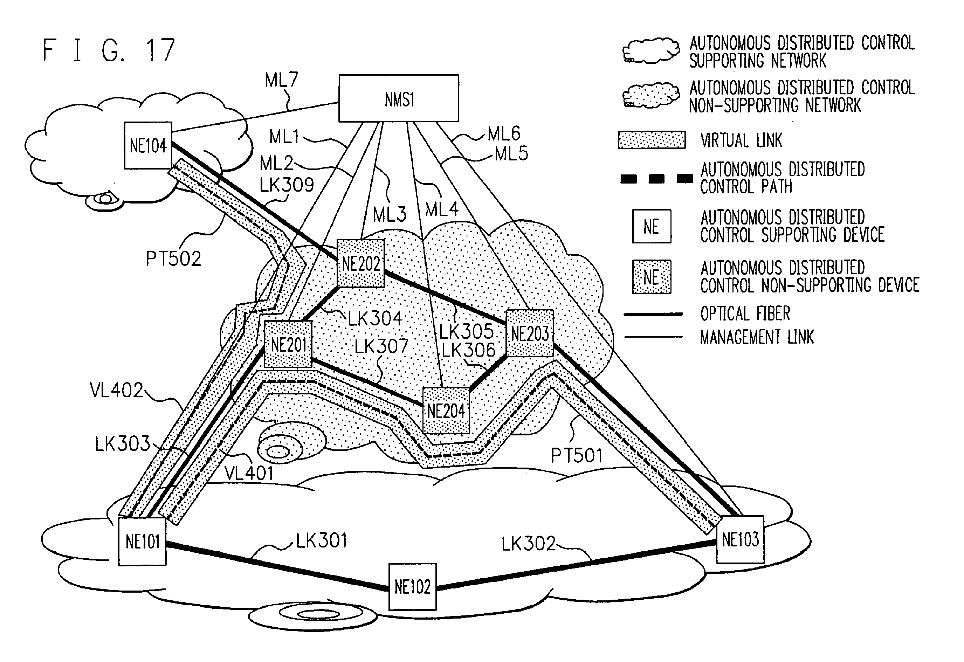

For example, in the network system shown in Fig. 17, another virtual link VL402 is registered in addition to the above described link VL401. The NMS 1 and the devices NE101, NE104 register the virtual link VL402 (NE101 - NE201 - NE202 - NE104) using the method described with reference to Fig. 7. Then, an autonomous distributed control path PT502 is set in the virtual link VL402. Thus, in the network system of Fig. 17, the two virtual links VL401 and VL402 are registered.

It is assumed here that a failure occurs in the link LK303 which is a common link in the two virtual links VL401, VL402. At this time, the autonomous distributed control supporting device NE101 detects the failure in the link LK303, and considers it to be failures in the two virtual links VL401, VL402. Therefore, the autonomous distributed control supporting device NE101 performs the path management method described in the first exemplary embodiment including the alarm information updating operation, the operation of path switching to backup, and the switching back operation with respect to the two virtual links VL401, VL402 (the autonomous distributed control paths PT501, PT502).

### [Fourth exemplary embodiment]

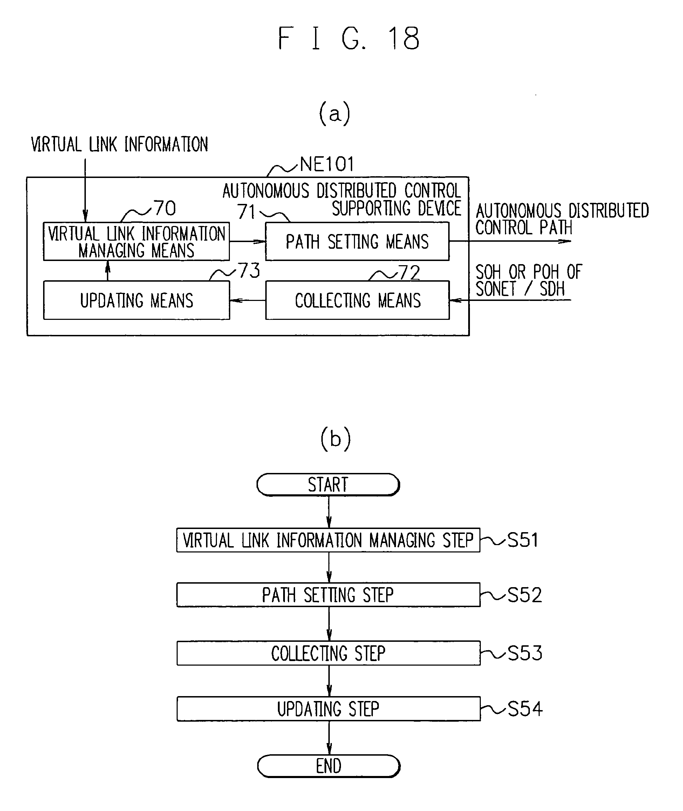

Although in the above described exemplary embodiments, the autonomous distributed control supporting device NE101 as the communication device of the present invention has been described as having the configuration shown in Fig. 3, it may just have a configuration shown in Fig. 18(A). As shown in Fig. 18(A), the device NE101 may include virtual link information managing means 70, path setting means 71, collecting means 72, and updating means 73. These means correspond to parts shown in Fig. 3 as follows. The virtual link information managing means 70 corresponds to the virtual link information management table 10. The path setting means 71 corresponds to the link information management table 41, the autonomous distributed control message processing unit 42, the resource information processing unit 44, the resource reservation processing unit 45, and the line setting unit 52. The collecting means 72 corresponds to the alarm monitoring unit 51. The updating means 73 corresponds to the virtual link processing unit 20.

A path management method shown in Fig. 18(B) is performed in the configuration shown in Fig. 18(A) as follows. The virtual link information managing means 70 manages virtual link information indicating a virtual link in association with alarm information indicating a state of the virtual link according to a request from the network management system (NMS 1), the virtual link being a route through an autonomous distributed control supporting device and an autonomous distributed control non-supporting device (step S51). The path setting means 71 sets an autonomous distributed control path in the virtual link (step S52). The collecting means 72 collects POH information or SOH information of SONET/SDH from the autonomous distributed control path (step S53). The alarm information managed by the virtual link information managing means is updated based on alarm information included in the POH information or SOH information collected by the collecting means 72 (step S54).

As described above, according to the present invention, a state of an autonomous distributed control path that is via an autonomous distributed control non-supporting device can be recognized in a network including both an autonomous distributed control supporting device and an autonomous distributed control non-supporting device. Accordingly, path switching such as switching to backup and switching back by autonomous distributed control is allowed.

Although the exemplary embodiments of the present invention have been described, the present invention is not limited to the above described exemplary embodiments, and various modifications may be made without departing from the spirit of the present invention.

For example, the control operations in the above described exemplary embodiments (the operations described using Figs. 7, 8, 11, 13, 14, and 18(B)) can be performed by hardware, software, or a combination thereof.

In a case where processing of the operations are performed by software, a program in which the processing sequence is recorded may be installed in a memory in a computer embedded in dedicated hardware and executed, or may be installed and executed in a general purpose computer which can execute various processing.

For example, the program can be previously recorded in a hard disk or a ROM (Read Only Memory) as a recording medium.

Alternatively, the program may be stored (recorded) temporarily or permanently in a removable recording medium such as a floppy (R) disk, a CD-ROM (Compact Disk Read Only Memory), an MO (MagnetoOptical) disk, a DVD (Digital Versatile Disc), a magnetic disk, or a semiconductor memory.

Such a removable recording medium can be provided as so-called packaged software.

Aside from being installed from a removable recording medium into a computer as described above, the program may be wirelessly transferred from a download site to a computer or transferred through a wired network such as a LAN (Local Area Network) or the Internet to a computer, so that the computer can receive the transferred program and install in a recording medium such as an internal hard disk.

The processing may be executed in chronical order according to the processing operation described in the above exemplary embodiments, or may be executed in parallel or independently depending on processing capacity of a device for executing them or as needed.

The systems described in the above exemplary embodiments may be configured as a logical set of a plurality of devices or may be configured such that the functions of the devices are mixed.

An example 1 describes a communication device used as an autonomous distributed control supporting device which supports autonomous distributed control including: virtual link information managing means for managing virtual link information indicating a virtual link in association with alarm information indicating a state of the virtual link according to a request from a network management device, the virtual link being a route through the communication device and an autonomous distributed control non-supporting device which does not support autonomous distributed control; path setting means for setting an autonomous distributed control path in the virtual link;
collecting means for collecting POH information or SOH information of SONET/SDH from the autonomous distributed control path; and updating means for updating the alarm information managed by the virtual link information managing means based on alarm information included in the POH information or SOH information collected by the collecting means.

An example 2 describes the communication device according to the example 1, further including path switching means for switching from a currently set autonomous distributed control path to a different autonomous distributed control path on an occasion when the alarm information is updated by the updating means.

An example 3 describes the communication device according to the example 2, wherein if the alarm information updated by the updating means indicates occurrence of a failure, the path switching means calculates a bypass path that is different from the currently set autonomous distributed control path, and switches from the autonomous distributed control path to the bypass path.

An example 4 describes the communication device according to the example 3, wherein if the alarm information updated by the updating means indicates recovery from the failure, the path switching means switches from the bypass path to the autonomous distributed control path set before the occurrence of the failure.

An example 5 describes the communication device according to any one of the examples 1 to 4, further including notifying means for notifying the network management system of a content of the update of the alarm information.

An example 6 describes a network system including the communication device according to any one of the examples 1 to 5.

An example 7 describes a path management method including: a virtual link information managing step of managing virtual link information indicating a virtual link in association with alarm information indicating a state of the virtual link, the virtual link being a route through an autonomous distributed control supporting device which supports autonomous distributed control and an autonomous distributed control non-supporting device which does not support autonomous distributed control; a path setting step of setting an autonomous distributed control path in the virtual link; a collecting step of collecting POH information or SOH information of SONET/SDH from the autonomous distributed control path; and an updating step of updating the alarm information managed by the virtual link information managing step based on alarm information included in the POH information or SOH information collected by the collecting step.

An example 8 describes the path management method according to the example 7, further including a path switching step of switching from a currently set autonomous distributed control path to a different autonomous distributed control path on an occasion when the alarm information is updated by the updating step.

An example 9 describes the path management method according to the example 8, wherein if the alarm information updated by the updating step indicates occurrence of a failure, the path switching step calculates a bypass path that is different from the currently set autonomous distributed control path, and switches from the autonomous distributed control path to the bypass path.

An example 10 describes the path management method according to the example 9, wherein if the alarm information updated by the updating step indicates recovery from the failure, the path switching step switches from the bypass path to the autonomous distributed control path set before the occurrence of the failure.

An example 11 describes the path management method according to any one of the examples 7 to 10, further including a notifying step for notifying a network management system of a content of the update of the alarm information, the network management system managing the autonomous distributed control supporting device and the autonomous distributed control non-supporting device.

An example 12 describes a program which causes a computer to execute: a virtual link information managing process for managing virtual link information indicating a virtual link in association with alarm information indicating a state of the virtual link, the virtual link being a route through an autonomous distributed control supporting device which supports autonomous distributed control and an autonomous distributed control non-supporting device which does not support autonomous distributed control; a path setting process for setting an autonomous distributed control path in the virtual link; a collecting process for collecting POH information or SOH information of SONET/SDH from the autonomous distributed control path; and an updating process for updating the alarm information managed by the virtual link information managing process based on alarm information included in the POH information or SOH information collected by the collecting process.

An example 13 describes the program according to the example 12, further causing the computer to execute a path switching process for switching from a currently set autonomous distributed control path to a different autonomous distributed control path on an occasion when the alarm information is updated by the updating process.

An example 14 describes the program according to the example 13, wherein if the alarm information updated by the updating process indicates occurrence of a failure, the path switching process calculates a bypass path that is different from the currently set autonomous distributed control path, and switches from the autonomous distributed control path to the bypass path.

An example 15 describes the program according to the example 14, wherein if the alarm information updated by the updating process indicates recovery from the failure, the path switching process switches from the bypass path to the autonomous distributed control path set before the occurrence of the failure.

An example 16 describes the program according to any one of the examples 12 to 15, further causing the computer to execute a notifying process for notifying a network management system of a content of the update of the alarm information, the network management system managing the autonomous distributed control supporting device and the autonomous distributed control non-supporting device.

## Claims

1. A communication device used as an autonomous distributed control supporting device which supports autonomous distributed control including:
virtual link information managing means for managing virtual link information indicating a virtual link in association with alarm information indicating a state of the virtual link according to a request from a network management device, the virtual link being a route through the communication device and an autonomous distributed control non-supporting device which does not support autonomous distributed control;
path setting means for setting an autonomous distributed control path in the virtual link;
collecting means for collecting POH information or SOH information of SONET/SDH from the autonomous distributed control path; and
updating means for updating the alarm information managed by the virtual link information managing means based on alarm information included in the POH information or SOH information collected by the collecting means.

2. The communication device according to claim 1, further including path switching means for switching from a currently set autonomous distributed control path to a different autonomous distributed control path on an occasion when the alarm information is updated by the updating means.

3. The communication device according to claim 2, wherein if the alarm information updated by the updating means indicates occurrence of a failure, the path switching means calculates a bypass path that is different from the currently set autonomous distributed control path, and switches from the autonomous distributed control path to the bypass path.

4. The communication device according to claim 3, wherein if the alarm information updated by the updating means indicates recovery from the failure, the path switching means switches from the bypass path to the autonomous distributed control path set before the occurrence of the failure.

5. The communication device according to any one of claims 1 to 4, further including notifying means for notifying the network management system of a content of the update of the alarm information.

6. A network system including the communication device according to any one of claims 1 to 5.

7. A path management method including:
a virtual link information managing step of managing virtual link information indicating a virtual link in association with alarm information indicating a state of the virtual link, the virtual link being a route through an autonomous distributed control supporting device which supports autonomous distributed control and an autonomous distributed control non-supporting device which does not support autonomous distributed control;
a path setting step of setting an autonomous distributed control path in the virtual link;
a collecting step of collecting POH information or SOH information of SONET/SDH from the autonomous distributed control path; and
an updating step of updating the alarm information managed by the virtual link information managing step based on alarm information included in the POH information or SOH information collected by the collecting step.

8. The path management method according to claim 7, further including a path switching step of switching from a currently set autonomous distributed control path to a different autonomous distributed control path on an occasion when the alarm information is updated by the updating step.

9. The path management method according to claim 8, wherein if the alarm information updated by the updating step indicates occurrence of a failure, the path switching step calculates a bypass path that is different from the currently set autonomous distributed control path, and switches from the autonomous distributed control path to the bypass path.

10. The path management method according to claim 9, wherein if the alarm information updated by the updating step indicates recovery from the failure, the path switching step switches from the bypass path to the autonomous distributed control path set before the occurrence of the failure.

11. The path management method according to any one of claims 7 to 10, further including a notifying step for notifying a network management system of a content of the update of the alarm information, the network management system managing the autonomous distributed control supporting device and the autonomous distributed control non-supporting device.

12. A program which causes a computer to execute:
a virtual link information managing process for managing virtual link information indicating a virtual link in association with alarm information indicating a state of the virtual link, the virtual link being a route through an autonomous distributed control supporting device which supports autonomous distributed control and an autonomous distributed control non-supporting device which does not support autonomous distributed control;
a path setting process for setting an autonomous distributed control path in the virtual link;
a collecting process for collecting POH information or SOH information of SONET/SDH from the autonomous distributed control path; and
an updating process for updating the alarm information managed by the virtual link information managing process based on alarm information included in the POH information or SOH information collected by the collecting process.

13. The program according to claim 12, further causing the computer to execute a path switching process for switching from a currently set autonomous distributed control path to a different autonomous distributed control path on an occasion when the alarm information is updated by the updating process.

14. The program according to claim 13, wherein if the alarm information updated by the updating process indicates occurrence of a failure, the path switching process calculates a bypass path that is different from the currently set autonomous distributed control path, and switches from the autonomous distributed control path to the bypass path.

15. The program according to claim 14, wherein if the alarm information updated by the updating process indicates recovery from the failure, the path switching process switches from the bypass path to the autonomous distributed control path set before the occurrence of the failure.
